# EUROPEAN PATENT SPECIFICATION

(11) **EP 4 359 759 B1**
(45) Date of publication and mention of the grant of the patent: **08.04.2026**
(21) Application number: 22734968.5
(22) Date of filing: 23.06.2022
(51) Int. Cl.: G01N 3/08, G01N 15/10, G01N 15/02, C08F 4/659, C08F 4/00

(54) **METHOD FOR DETERMINING COMPRESSIVE CHARACTER OF OLEFIN POLYMERISATION CATALYSTS AND OLEFIN POLYMERISATION CATALYST**
VERFAHREN ZUR BESTIMMUNG DER DRUCKEIGENSCHAFTEN VON OLEFINPOLYMERISIERUNGSKATALYSATOREN UND OLEFINPOLYMERISIERUNGSKATALYSATOR
PROCÉDÉ DE DÉTERMINATION DE CARACTÈRE DE COMPRESSION DE CATALYSEURS DE POLYMÉRISATION D'OLÉFINE ET CATALYSEUR DE POLYMÉRISATION D'OLÉFINE

(30) Priority: 24.06.2021 EP 21181487
(43) Date of publication of application: 01.05.2024
(73) Proprietor: Borealis GmbH, 1020 Vienna (AT)
(72) Inventor: CASTRO, Pascal, 06850 Kulloo (FI); HELLSTEN, Niko, 01200 Vantaa (FI); KARTTUNEN, Antti Juhani, 02130 Espoo (FI); REZNICHENKO, Alexander, 00560 Helsinki (FI); HONGELL, Anu-Leena, 06750 Kulloo (FI); TURPEINEN, Tarja-Tuulikki, 06850 Kulloo (FI); JOENVUO, Erika, 06850 Kulloo (FI); KANELLOPOULOS, Vasileios, 4021 Linz (AT)
(74) Representative: Dehns
(86) International application number: PCT/EP2022/067181
(87) International publication number: WO 2022/268957

(56) References cited:
- JP-A- 2002 284 808
- JP-A- 2019 172 958
- SUBERO-COUROYER ET AL: "Weibull Analysis of Quasi-Static Crushing Strength of Catalyst Particles", CHEMICAL ENGINEERING RESEARCH AND DESIGN, ELSEVIER, AMSTERDAM, NL, vol. 81, no. 8, 1 September 2003 (2003-09-01), pages 953 - 962, XP022537055, ISSN: 0263-8762, DOI: 10.1205/026387603322482194

## Description

### FIELD OF THE DISCLOSURE

The present disclosure relates to characterisation of olefin polymerisation catalyst particles, and more particularly to determination of the compressive character of an olefin polymerisation catalyst that includes key descriptors to determine the mechanical properties of olefin polymerisation catalysts, determination of quality of olefin polymer catalyst and predicting performance of olefin polymerisation catalysts in an olefin polymerisation process. The present disclosure further concerns polymerisation catalysts having specific compressive strength descriptors.

### BACKGROUND OF THE DISCLOSURE

An important aspect of olefin polymerisation catalysts consists in the mechanical properties of the support material used to prepare the catalyst. In particular, the viscoelastic properties of the starting support material will determine the initial fragmentation behaviour as well as the internal morphological developments of the catalyst in the polymerisation process, which in turn will influence the outcome of the polymerisation reaction. If the carrier material is too brittle, it will fragment too fast under polymerisation conditions and will create fines and fluff due to uncontrolled initial particle fragmentation. If the carrier material is too strong, it will not break easily under polymerisation conditions and lead to lower polymerisation activity mainly due to inability to access the active sites as well as to severe reactants internal mass transfer limitations. In fact, the initially formulated catalyst/polymer macroparticles exhibit irregular shape, thus, causing severe external mass and heat transfer limitations, besides severe flow ability issues are imposed leading to poor performance of the polymerisation reactors. Compression testing is commonly used to determine the mechanical behaviour of individual particles from a powder sample, including viscoelastic properties or breaking behaviour (see for example Antonyuk et al. Chemical Engineering Science 60 (2005) 4031-4044). Specifically, micro-compression testing is used extensively in material science to measure the mechanical strength of micro sized objects, including microporous spherical particles (see for example Paul et al. Advanced Powder Technology 25 (2014) 136-153). More specifically, micro compression techniques have been utilised in olefin polymerisation catalyst development to assess the suitability for a given carrier material to be employed as a support for olefin polymerisation catalyst, for instance with dialkoxymagnesium granules (US8632882B2), ion-exchange layered silicate (JP2019172958, EP0874006B1, US6353063 or EP1241188B1) or silica (JP2017071741A). The aforementioned studies have however been limited to determine the mechanical strength of the initial carrier material as an average value of a series of measurements on a sample population. It does not necessarily reflect the actual mechanical strength of the final catalyst and provides little indication about the final performance and operability in the polymerisation process.

On the other hand, it is well known in the scientific and patent literature that the distribution of structural defects and polymerisation active sites inside the catalysts particles and within a catalyst particles population will affect the final performance of the catalyst in the polymerisation reactor during the olefin polymerisation process reaction. More specifically, an even distribution of catalyst active sites, which are the polymerisation loci, in the catalyst particles will result in homogeneous catalyst fragmentation since the stresses developed by the nascent polymer are evenly distributed in the particle. As a result, the individual particle growth of the catalyst/polymer particles will be even, thus leading to narrow particle size distribution developments in the process (no presence of small-size and big-size particles).

For example, US7754834B2 teaches that polymer particles are formed by the continuous exposure of olefin monomers to catalysts present in the polymerisation reactor where the polymer particle grows from the initial formation of "micro-particle clusters" at the active sites of the catalyst particles. As these micro-particle clusters develop, voids of space are created between the growing primary polymer particles, which ultimately represent 10 to 25% of the final polymer particle volume. The existence of these voids of space in the final polymer particles lead to reduced polymer powder bulk density. Low polymer powder bulk density is commonly associated to lowered production throughput at the polymerisation plant and operability issues such as fines formation, poor material flowability, excessive carry over and is commonly associated to mass and heat transfer limitations leading to sheeting and chunking of the polymerisation reactor.

In an attempt to reduce sheeting and/or chunking in the polymerisation reactor during operations, WO2018212852A1 discloses that olefin polymerisation catalyst compositions prepared from a carrier having 10% to 80% in volume of pores with a pore size in the range of 300-1500 Å and/or a BET surface area of less than 700 m2/g exhibit a more uniformly distributed catalyst components throughout the support material. The distribution of the catalysts components within the support material are however only assessed as the difference of aluminium content between the surface and the inside of the catalyst by XPS, which is rather a qualitative method to evaluate the actual distribution of the catalytically active components within the particle. No actual measurement of the aluminium distribution throughout the support is reported to support the disclosure.

Similarly, WO2016176135A1 teaches that poor polymerisation reactor operability often results from uneven distribution of catalyst active sites within the support pores network. The inventors claim that using supported catalyst compositions having a macro pore volume up to 1.23 mL/g exhibit good catalyst flowability and provide enhanced reactor operability. There is however no polymerisation data disclosed which would permit ascertaining the catalyst performance in polymerisation and the actual improvement in operability.

In a comparable attempt to reduce sheeting and/or chunking in the polymerisation reactor during operations, WO2018175071A1 discloses that olefin catalyst compositions prepared from a carrier having a macroporosity ranging from 0.15-0.50 mL/g result in increased catalyst components deposition on and/or in the support material. The inventors claim that using such supports reduces sheeting and/or chunking inside the polymerisation reactor during polymerisation. However, no indication of improvement of the catalyst activity or of the resulting polymer powder bulk density is provided.

US7244785B2 discloses that when a solid polymeric compound such as an aluminoxane is used as the activator, the loading of the activator during the catalyst preparation directly influences the catalyst productivity and the resulting polymer powder bulk density: the higher the loading of the aluminoxane activator in the catalyst preparation, the higher the productivity and the bulk density. It was however reported by the inventors that fouling on the polymerisation reactor walls started to build at aluminoxane loadings higher than 6.40 mol_{MAO}/g_{silica} due to leaching of active species into the reaction medium. This fouling phenomenon at higher aluminoxane loading prevents the inventors to exploit the full potential of their catalyst system to reach maximum catalyst productivity with high bulk density of the polymer powder.

Investigations on the influence of particle mechanical strength on the performance of catalysts in olefin polymerisation has been limited so far to measure the mechanical strength of the carrier material under ambient conditions. It is however well known in the art that the mechanical strength of a porous particle consisting of a network of pores and voids inside a spherical particle made of a given material such as silica or alumina will depend to a large extent on the presence of structural defects (also characterized by the pore size distribution, pore connectivity as well as by the tortuous nature of the pores (see Kanellopoulos at al., 2007 'Evaluation of the Internal Particle Morphology in Catalytic Gas-Phase Olefin Polymerisation Reactors', Ind. Eng. Chem. Res. 2007, 46, 1928-1937), the nature and size of the structural defects and their distribution inside the spherical particle. Conclusively, structural defects and their distribution inside a particle can be described in terms of pore structure (open pore, closed pore, channel or cavity), pore size (micropores, mesopores and macropores) and pore size distribution. In the specific case of single-site catalysts prepared from an organometallic transition metal complex, an oligomeric aluminoxane activator and an inorganic oxide microspherical porous support, the pore structure of the final catalyst particles is defined by the pore structure of the starting support material, the nature and amount of the chemicals loaded onto the surface of the support and the operating conditions used during the catalyst preparation.

For example, WO2016176135A1 demonstrates that when methylaluminoxane is used as the activator, the porosity of the final catalyst is different from the porosity of the starting support material and varies depending on the conditions applied during the catalyst preparation. It is therefore reasonable to infer that the structural defects and their distribution inside a single-site catalyst particle prepared from an organometallic transition metal complex, an oligomeric aluminoxane activator and an inorganic oxide microspherical porous support will be defined by the nature and amount of the chemicals loaded onto the surface of the support and the operating conditions used during the catalyst preparation.

### BRIEF DESCRIPTION OF THE DISCLOSURE

An object of the present disclosure is to characterise a micro-sized particulate olefin polymerisation catalyst and allow predicting its performance as an olefin polymerisation catalyst under olefin polymerisation conditions as derived by the present method so as to overcome the above limitations.

The object of the disclosure is achieved by a method for determining the compressive character of an olefin polymerisation catalyst, and an olefin polymerisation catalyst, which are characterized by what is stated in the independent claims. The preferred embodiments of the disclosure are disclosed in the dependent claims.

The disclosure is based on the idea of determining the compressive character of olefin polymerisation catalyst particles via micro-compression testing. It was also realised that the inter-particles distribution of the structural defects in the catalyst particles can be estimated by the Weibull distribution analysis of the obtained compressive strength data that is in turn an efficient method to evaluate the homogeneity of the catalyst components distribution within the population of particles. It was further realised that the information derived from the micro-compression testing can be correlated with polymerisation performance indicators such as variation in polymerisation activity for a given catalyst.

### BRIEF DESCRIPTION OF THE DRAWINGS

In the following the disclosure will be described in greater detail by means of preferred embodiments with reference to the accompanying drawings, in which
Figure 1 shows a Weibull distribution analysis for a group of olefin polymerisation catalysts;
Figure 2 shows Weibull scale vs. MAO loading for a group of olefin polymerisation catalysts;
Figure 3 shows Weibull modulus vs. MAO loading for a group of olefin polymerisation catalysts;
Figure 4 shows catalyst activity vs. MAO loading for a group of olefin polymerisation catalysts;
Figure 5 shows standard deviation of catalyst activity vs. MAO loading
Figure 6 shows standard deviation of catalyst activity vs. Weibull modulus for a group of olefin polymerisation catalysts.

### DETAILED DESCRIPTION OF THE DISCLOSURE

The disclosure relates to determining the compressive character of an olefin polymerisation catalyst and utilizing the obtained information in evaluating the quality of said olefin polymerisation catalyst and predicting its performance in olefin polymerisation processes.

The term "compressive character" as used herein and hereafter refers to the expression of mechanical strength for a material in one or more parameters relating to tolerance to compressive stress applied to the material and obtained by measuring this feature, i.e. compressive strength descriptors.

The term "crushing strength" as used herein and hereafter refers to the greatest compressive stress that a brittle solid can sustain without fracture. As used within the context of this disclosure it in particular refers to the capacity of the individual particles of the present olefin polymerisation catalysts to withstand stress subjected to it in microcompression testing under inert atmosphere as discussed herein.

The term "compressive strength" as used herein and hereafter refers to a feature of mechanical strength as a character of a material. As used within the context of this application it refers to the average of measured crushing strength of a number of particles of the present olefin polymerisation catalysts as discussed herein.

The present disclosure provides a method for determining the compressive character of an olefin polymerisation catalyst, comprising subjecting particles of an olefin polymerisation catalyst to micro-compression testing to obtain crushing strength data of the particles of the olefin polymerisation catalyst to determine the compressive character of the olefin polymerisation catalyst. Preferably, the crushing strength data is used to derive the Weibull parameters for the olefin polymerisation catalyst from the Weibull distribution analysis of the crushing strength data.

The present method of determining the compressive character, including the compressive strength and the Weibull parameters of an olefin polymerisation catalyst as discussed herein and hereafter is a highly efficient characterisation method to evaluate the quality of an olefin polymerisation catalyst and to predict its performance in olefin polymerisation processes.

### Crushing strength

The method of the present disclosure relays on determining the crushing strength of the particles of the analysed olefin polymerisation catalyst.

The crushing strength may be determined by measuring the individual crushing strength of any 10 particles or more, e.g. exactly 10 particles to obtain crushing strength data.

The determination of the crushing strength of the olefin polymerisation catalyst particles can be efficiently performed under inert atmosphere by compression testing, such as micro-compression testing.

In an exemplifying embodiment, the individual crushing strength of any 10 particles or more is measured by means of a micro-compression tester MCT-510, manufactured by Shimadzu Seisakusho Ltd.

### Compressive strength

The crushing strength data obtained from the individual olefin polymerisation catalyst particles can then be used for calculating an average value of the measurements to provide compressive strength of the analysed olefin polymerisation catalyst. The average value of the measurements is calculated preferably after removal of statistical outliers.

### Weibull distribution analysis

Preferably in the present methods the compressive character is determined by deriving a Weibull distribution analysis of the crushing strength data of the particles of the analysed polymerisation catalyst. The Weibull analysis of the compressive strength data may be performed using standard statistical analysis software such as Minitab, Excel, or Origin.

The Weibull distribution is commonly used in material science to describe the variability in the fracture mechanical strength of brittle materials within a sample population. The two characteristic parameters of a Weibull analysis in compressive testing are the Weibull modulus and the compressive strength. The Weibull modulus is a dimensionless parameter, which describes the variability in the distribution of the measured compressive strength within the single particles of the sample population. The Weibull modulus corresponds to the shape parameter of the Weibull distribution.

In compression testing, the scale parameter of the Weibull distribution describes the compressive strength of a representative single particle of the sample population and is expressed in MPa units.

A low Weibull modulus corresponds to high variability in measured mechanical strength within the sample population and is indicative of uneven distribution of structural defects in the material resulting in a non-uniform breaking behaviour under stress. A high Weibull modulus on the other hand will indicate an even distribution of flaws in the material resulting in a uniform breaking behaviour under stress. A high scale parameter corresponds to a high particle strength sample. A low scale parameter corresponds to a low particle strength sample.

Use of both parameters of the Weibull distribution is preferred in the present methods to describe the final properties of the studied material, and in the case of particles of olefin polymerisation catalysts, both parameters will influence the polymerisation behaviour and final polymer powder properties.

Accordingly, in an embodiment of the present methods the method comprises deriving the scale parameter of the Weibull distribution and Weibull modulus of the Weibull distribution for an olefin polymerisation catalyst from the crushing strength data to determine the compressive character of the olefin polymerisation catalyst.

### Evaluating the quality of an olefin polymerisation catalyst

The present disclosure provides a method for evaluating the quality of an olefin polymerisation catalyst, comprising
(o) determining the compressive character of an olefin polymerisation catalyst as discussed herein, and
(p) evaluating the quality of the olefin polymerisation catalyst from the information obtained from the determination of its compressive character.

The term "quality" as used herein and hereafter refers to one or more features and/or characteristics possessed by the present olefin polymerisation catalyst, in particular in reference to its ability to perform acceptably in an olefin polymerisation process. Particularly desired qualities include the sensitivity of the olefin polymerisation catalyst towards smooth fragmentation defined by its mechanical properties. The outcome of the method for evaluating the quality may also be used to determine the selection of the olefin polymerisation and/or process operating conditions of an olefin polymerisation process, especially during a prepolymerisation step, preferably to assure controllable fragmentation step within said process.

Typically the method for evaluating the quality of an olefin polymerisation catalyst is achieved by deriving a Weibull modulus and a Weibull scale parameter for the olefin polymerisation catalyst by measuring individual crushing strength of at least 10 randomly selected individual particles within a sample population of the olefin polymerisation catalyst with a micro-compression tester and performing a Weibull distribution analysis of obtained the crushing strength data, preferably after removing statistical outliers.

In a particular example, the method for evaluating the quality of a supported polymerisation catalyst comprises comparing one or more parameters of the Weibull distribution analysis to predetermined target values. In a specific example, the method involves comparing the Weibull modulus and/or the Weibull scale parameter to respective predetermined target values to evaluate the quality of an olefin polymerisation catalyst.

Thus in an embodiment the method for evaluating the quality of an olefin polymerisation catalyst comprises
(p1) deriving a Weibull modulus and a Weibull scale parameter for the olefin polymerisation catalyst by measuring the individual crushing strength of at least 10 randomly selected individual particles within a sample population of the olefin polymerisation catalyst with a micro-compression tester and performing a Weibull distribution analysis of the obtained crushing strength data; and
(p2) comparing the Weibull modulus and the Weibull scale parameter to respective predetermined target values to evaluate the quality of the olefin polymerisation catalyst.

The inter-particles distribution of structural defects in the catalyst particles can be estimated by the Weibull modulus of the Weibull distribution of the obtained crushing strength data. This is an efficient method to evaluate the homogeneity of the catalyst component distribution within the population of particles. Furthermore, the information derived from the micro-compression testing can be correlated with polymerisation performance indicators such as variation in polymerisation activity for a given catalyst.

Thus, the method for evaluating the quality of an olefin polymerisation catalyst preferably comprises (q) estimating the inter-particles distribution of structural defects in particles of the olefin catalyst from the Weibull distribution analysis.

Furthermore, the present method for evaluating the quality of an olefin polymerisation catalyst preferably comprises (r) establishing relationship between one or more compressive strength descriptors of the analysed polymerisation catalyst, such as compressive strength or one or more parameters of the Weibull analysis, in particular Weibull modulus, and one or more polymerisation performance indicators such as polymerisation activity and/or variation in polymerisation activity for a number of repeats of the polymerisation experiment, preferably variation in polymerisation activity.

The term "relationship" as used herein refers to circumstantial and/or causal, preferably causal, connection and/or correlation between the referred characteristic of the olefin polymerisation catalyst and/or polymerisation performance indicator.

Still further, the method for evaluating the quality of an olefin polymerisation catalyst preferably comprises (s) establishing relationship between one or more compressive strength descriptors of the analysed polymerisation catalyst, such as compressive strength or one or more parameters of the Weibull analysis, in particular Weibull modulus, and one or more characteristics of a polymer powder obtained by polymerising olefin monomers with the analysed polymerisation catalyst.

### Predicting performance of an olefin polymerisation catalyst

The present description further provides a method for predicting performance of an olefin polymerisation catalyst in an olefin polymerisation process, wherein the compressive strength of the olefin polymerisation catalyst is determined as discussed herein.

Typically the method for predicting performance of an olefin polymerisation catalyst in a polymerisation reaction as discussed herein, comprises
(x) determining the compressive character of the olefin polymerisation catalyst; and
(y) predicting the performance of the olefin polymerisation catalyst by evaluating the information obtained from the determination of its compressive character.

Furthermore the method for predicting performance of an olefin polymerisation catalyst in a polymerisation reaction may be used to predict the characteristics of the polymer powder obtained by polymerising olefin monomers with the olefin polymerisation catalyst.

The method in particular allows e.g. the prediction of the bulk density and/or particle size distribution of the polymer powder obtained by the polymerisation of an olefin monomer, optionally in the presence of an olefin comonomer, in a polymerisation reactor, optionally in a plurality of polymerisation reactors in series, in the presence of an olefin polymerisation catalyst in a particulate form. The bulk density may also be utilized to predict fluidized bulk density that is a key operational parameter determining the throughput and the operability of the reactors.

In an embodiment the method for predicting performance of an olefin polymerisation catalyst comprises (y1) establishing relationship between the catalyst compressive strength descriptors such as compressive strength or Weibull parameters and one or more characteristics of the physical and/or mechanical properties of the polymerisation catalyst; and predicting the performance of the olefin polymerisation catalyst by evaluating the information obtained from the said relationship.

The one or more characteristics of the physical and/or mechanical properties of the polymerisation catalyst may be selected from a group consisting of particle size, particle size distribution, density, and microstructure, including crystalline and amorphous fraction, specific surface area, porosity, pore volume, pore size, pore size distribution, pore shape, pore network tortuosity, and pore connectivity.

In a further embodiment the method for predicting performance of an olefin polymerisation catalyst comprises (y2) evaluating the quality of an olefin polymerisation catalyst as discussed herein and predicting the performance the olefin polymerisation catalyst based on information obtained from evaluating the quality of the olefin polymerisation catalyst.

The method for predicting performance of an olefin polymerisation catalyst preferably further comprises (y3) performing a Weibull distribution analysis of the crushing strength data; and comparing one or more parameters or any combination thereof of the Weibull distribution to predetermined target values to predict the performance of the olefin polymerisation catalyst.

In a particular example the method for predicting performance of an olefin polymerisation catalyst preferably comprises determining a (Weibull modulus) × (scale parameter) product **and a (Weibull** modulus) / (scale parameter) ratio; and comparing the (Weibull modulus) × (scale parameter) product and the (Weibull modulus) / (scale parameter) ratio to respective predetermined target values to predict the performance of the olefin polymerisation catalyst during a polymerisation reaction.

### Olefin polymerisation catalyst

The olefin polymerisation catalyst of the present disclosure is usually a single-site catalyst. A single-site catalyst typically comprises (i) a transition metal complex, (ii) a cocatalyst, and optionally (iii) a support.

With the present methods it has been surprisingly identified that olefin polymerisation catalysts having a Weibull modulus higher than 2, preferably higher than 2.5, more preferably higher than 3, typically from 2 to 10, preferably from 2.5 to 8.5, even more preferably from 3 to 8, provide excellent performance in olefin polymerisation processes.

The olefin polymerisation catalyst preferably further has a Weibull scale parameter higher than 6 MPa, preferably higher than 7 MPa, more preferably higher than 8 MPa, typically from 6 to 20 MPa, preferably from 7 to 18 MPa, more preferably from 8 to 15 MPa.

It is further preferred that compressive strength of the particles of the olefin polymerisation catalyst is at least 5 MPa, as measured with a microcompression tester as discussed herein, preferably at least 7 MPa, more preferably from 7 to 15 MPa.

### Transition metal complex (i)

The transition metal complex comprises a transition metal (M) of Group 3 to 10 of the Periodic Table (IUPAC 2007) or of an actinide or lanthanide.

The term "transition metal complex " in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the transition metal complex has the following formula (i-I):

(L)ₘRₙMX_{q} (i-I)

wherein
"M" is a transition metal (M) of Group 3 to 10 of the Periodic Table (IUPAC 2007),
each "X" is independently a monoanionic ligand, such as a σ-ligand,
each "L" is independently an organic ligand which coordinates to the transition metal "M",
"R" is a bridging group linking said organic ligands (L),
"m" is 1, 2 or 3, preferably 2
"n" is 0, 1 or 2, preferably 0 or 1,
"q" is 1, 2 or 3, preferably 2 and
m+q is equal to the valence of the transition metal (M).

"M" is preferably selected from the group consisting of zirconium (Zr), hafnium (Hf), or titanium (Ti), more preferably selected from the group consisting of zirconium (Zr) and hafnium (Hf). "X" is preferably a halogen, most preferably CI.

Most preferably, the transition metal complex (i) is a metallocene complex, which comprises a transition metal compound, as defined above, which contains a cyclopentadienyl, indenyl or fluorenyl ligand as the substituent "L". Further, the ligands "L" may have one or more substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

In another embodiment, the transition metal complex (i) has the following formula (i-II): 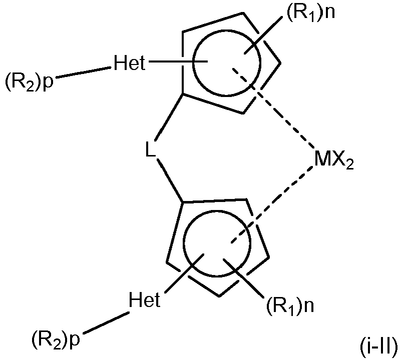
wherein each X is independently a halogen atom, a C1-6-alkyl, C1-6-alkoxy group, phenyl or benzyl group;
each Het is independently a monocyclic heteroaromatic containing at least one heteroatom selected from O or S;
L is -R'2Si-, wherein each R' is independently C1-20 hydrocarbyl or C1-10 alkyl substituted with alkoxy having 1 to 10 carbon atoms;
M is Ti, Zr or Hf;
each R₁ is the same or different and is a C1-6 alkyl group or C1-6 alkoxy group;
each n is 1 to 2;
each R₂ is the same or different and is a C1-6 alkyl group, C1-6 alkoxy group or -Si(R)3 group;
each R is C1-10 alkyl or phenyl group optionally substituted by 1 to 3 C1-6 alkyl groups; and
each p is 0 to 1.

Preferably, the compound of formula (i-II) has the structure (i-III) 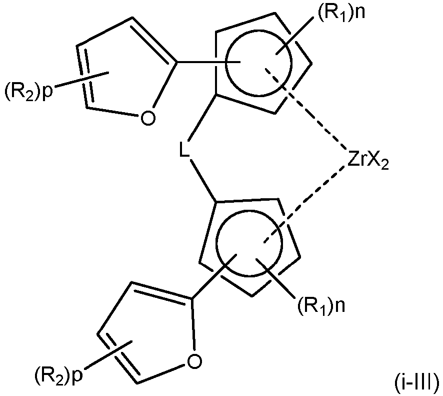
wherein each X is independently a halogen atom, a C1-6-alkyl, C1-6-alkoxy group, phenyl or benzyl group;
L is a Me2Si-;
each R₁ is the same or different and is a C1-6 alkyl group, e.g. methyl or t-Bu;
each n is 1 to 2;
R₂ is a -Si(R)3 alkyl group; each p is 1;
each R is C1-6 alkyl or phenyl group.

### Cocatalyst (ii)

To form a polymerisation catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

According to the present disclosure, a cocatalyst comprising a group 13 element is required such as a boron-containing cocatalyst or an Al containing cocatalyst. The use of an aluminoxane cocatalyst in combination with the above defined metallocene catalyst complexes is most preferred.

The aluminoxane cocatalyst can be one of formula (ii-I): 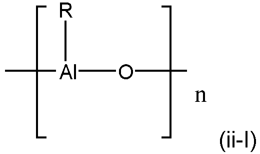 where n is from 6 to 20 and R has the meaning below.

Aluminoxanes are formed on partial hydrolysis of organoaluminum compounds, for example those of the formula AIR3, AIR2Y and AI2R3Y3 where R can be, for example, C1-C10-alkyl, preferably C1-C5-alkyl, or C3-C10-cycloalkyl, C7-C12-arylalkyl or -alkylaryl and/or phenyl or naphthyl, and where Y can be hydrogen, halogen, preferably chlorine or bromine, or C1-C10-alkoxy, preferably methoxy or ethoxy. The resulting oxygencontaining aluminoxanes are not in general pure compounds but mixtures of oligomers of the formula (ii-I).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

A boron-containing cocatalyst may also be used, optionally in combination with the aluminoxane cocatalyst.

Boron-containing cocatalysts of interest include those of formula (ii-II)

BY₃ (ii-II)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are fluorine, trifluoromethyl, aromatic fluorinated groups such as p-fluorophenyl, 3,5-difluorophenyl, pentafluorophenyl, 3,4,5-trifluorophenyl and 3,5-di(trifluoromethyl)phenyl. Preferred options are trifluoroborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(3,5-difluorophenyl)borane and/or tris (3,4,5-trifluorophenyl)borane.

Particular preference is given to tris(pentafluorophenyl)borane.

However it is preferred that borates are used, i.e. compounds containing a borate.

These compounds generally contain an anion of formula (ii-III):

(Z)4B- (ii-III)

where Z is an optionally substituted phenyl derivative, said substituent being a halo-C1-6-alkyl or halo group. Preferred options are fluoro or trifluoromethyl. Most preferably, the phenyl group is perfluorinated.

Such ionic cocatalysts preferably contain a weakly-coordinating anion such as tetrakis(pentafluorophenyl)borate or tetrakis(3,5-di(trifluoromethyl)phenyl)borate.

Suitable cationic counter-ions include triphenylcarbenium and are protonated amine or aniline derivatives such as methylammonium, anilinium, dimethylammonium, diethylammonium, N-methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include: tributylammoniumtetrakis(pentafluorophenyl)borate, tributylammoniumtetrakis(trifluoromethylphenyl)borate, tributylammoniumtetrakis(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetrakis(pentafluorophenyl)borate, N, N-di(propyl)ammoniumtetrakis(pentafluorophenyl)borate, di(cyclohexyl)ammoniumtetrakist(pentafluorophenyl)borate, triphenylcarbeniumtetrakis(pentafluorophenyl)borate, or ferroceniumtetrakis(pentafluorophenyl)borate.

Preference is given to triphenylcarbeniumtetrakis(pentafluorophenyl) borate, N,N-dimethylaniliniumtetrakis(pentafluorophenyl)borate, N,N- dimethylcyclohexylammoniumtetrakis(pentafluorophenyl)borate or N,N- dimethylbenzylammoniumtetrakis(pentafluorophenyl)borate.

Preferred borates of use in the invention therefore comprise the trityl, i.e. triphenylcarbenium ion. Thus, the use of Ph3CB(PhF5)4 and analogues therefore are especially favoured.

Suitable amounts of cocatalyst will be well known to the person skilled in the art.

Preferably, the amount of cocatalyst is chosen to reach below defined molar ratios.

When a boron containing catalyst The molar ratio of feed amounts of boron (B) to the metal ion (M) (preferably zirconium) of the metallocene boron/M may be in the range 0.1:1 to 10:1 mol/mol, preferably 0.3:1 to 7:1, especially 0.3:1 to 5:1 mol/mol.

Even more preferably, the molar ratio of feed amounts of boron (B) to metal ion (M) (preferably zirconium) of the metallocene boron/M is from 0.3:1 to 3:1

The molar ratio of Al from the aluminoxane to the metal ion (M) (preferably zirconium) of the metallocene Al/M may be in the range 1:1 to 2000:1 mol/mol, preferably 10:1 to 1000:1, and more preferably 50:1 to 600:1 mol/mol.

### Support (iii)

The present polymerisation catalyst may be in solid but unsupported form produced following the protocols in WO03/051934. The present polymerisation catalyst is preferably in solid supported form. The particulate support material used may be an inorganic porous support such as clay, such as ion-exchange layered silicate, or inorganic oxide, such as silica, alumina, silica-alumina or titanium oxide. Preferably, the particulate support material is selected from a group consisting of silica, alumina or a mixed oxide such as silica-alumina, in particular silica.

The use of a silica support is preferred.

Preferably, the support is a porous material so that the complex may be loaded into the pores of the particulate support, e.g. using a process analogous to those described in WO94/14856, WO95/12622, WO2006/097497 and EP1828266.

The average particle size of the support such as silica support can be typically from 10 to 100 µm. The average particle size (i.e. median particle size, D₅₀) may be determined using the laser diffraction particle size analyser Malvern Mastersizer 3000, sample dispersion: dry powder.

The average pore size of the support such as silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

Typically the catalyst can contain from 5 to 500 µmol, such as 10 to 100 µmol of transition metal per gram of support such as silica, and 3 to 15 mmol of Al per gram of support such as silica.

### EXAMPLES

A series of metallocene catalysts based on a silica carrier having a surface area of 295 m²/g, a pore volume of 1.6 mL/g, an average pore diameter of 216 Å and a median particle size of 25 µm, with varying loadings of a rac-dimethylsilanediylbis{2-(5-(trimethylsilyl)furan-2-yl)-4,5-dimethylcyclopentadien-1-yl}zirconium dichloride metallocene and of a methylaluminoxane activator, and with varying amount of methylaluminoxane loaded to the synthesis reactor during the catalyst preparation. The obtained catalysts have been analysed for their elemental composition by ICP-OES and their mechanical strength has been measured as the catalyst particles compressive strength with micro compression testing.

### Chemicals and raw materials

Methylaluminoxane (30 wt% MAO solution in Toluene, Axion CA 1330) was obtained from Lanxess.

The rac-dimethylsilanediylbis{2-(5-(trimethylsilyl)furan-2-yl)-4,5-dimethylcyclopentadien-1-yl}zirconium dichloride metallocene was synthesised according to known procedures disclosed in US6326493B1.

### Comparative Example 1

Pre-treated silica is a commercial synthetic amorphous silica ES757 obtained from PQ Corp. The pre-treatment refers to silica commercial calcination at 600 °C according to a conventional PO catalyst technique.

### Catalysts preparation (Examples 1-5 in Table 1A/B and 2)

Pre-treated carrier is a synthetic amorphous silica obtained as a commercial product from PQ Corp. The pre-treatment refers to silica commercial calcination at 600 °C according to a conventional technique.

All operations are performed under an inert atmosphere of nitrogen using standard Schlenk and glovebox techniques.

A pre-contact mixture, obtainable by dissolution of 70 µmol of the racdimethylsilanediylbis{2-(5-(trimethylsilyl)furan-2-yl)-4,5-dimethylcyclopentadien-1-yl}zirconium dichloride metallocene in the desired volume of a methylaluminoxane solution (14 mmol Al as 30 wt% MAO solution in Toluene) set to match the target loading of methylaluminoxane as depicted in Table 1, and an additional volume of toluene in order to reach a total volume of 2.45 mL. The mixture is stirred for 1 hour in a glass vial. The obtained solution is then added drop-wise within 5 minutes to 1.0 g of a pre-treated silica carrier in a glass reactor under gentle mechanical stirring at room temperature. The crude catalyst is then gently mixed for another 1 hour then left to stand for further 17 hours. The catalyst is then dried in vacuo for 30 minutes at 60 °C.

**Table 1A. Catalysts data**

| **#** | **MC loading mmol/kg SiO2** | **MAO loading mol/kg SiO2** | **SiO2 g/g cat** | **MC mmol/kg SiO2** | **MAO mol/kg SiO2** |
|---|---|---|---|---|---|
| E1 | 70.0 | 5.6 | 0.726 | 68.462 | 5.717 |
| E2 | 70.0 | 7.0 | 0.723 | 48.804 | 6.049 |
| E3 | 70.0 | 8.4 | 0.693 | 64.013 | 6.897 |
| E4 | 70.0 | 9.8 | 0.675 | 47.780 | 7.735 |
| E5 | 70.0 | 11.2 | 0.647 | 65.495 | 8.647 |

**Table 1B. Compressive strength data**

| **#** | **Cs (MPa)** | **Weibull modulus** | **Weibull scale (MPa)** |
|---|---|---|---|
| CE1 | 3.59 | 3.07 | 4.01 |
| E1 | 6.70 | 1.36 | 7.32 |
| E2 | 5.41 | 2.84 | 6.08 |
| E3 | 7.01 | 3.14 | 7.84 |
| E4 | 9.06 | 3.74 | 10.04 |
| E5 | 9.18 | 3.27 | 11.04 |

### Catalyst analytics and characterisation

### Al and Zr content in a solid catalyst component by ICP-OES

In a glovebox, an aliquot of the catalyst (ca. 40 mg) is weighted into a glass weighing boat using an analytical balance. The sample is then allowed to be exposed to air overnight while being placed in a steel secondary container equipped with an air intake. Then, 5 mL of concentrated (65 %) Nitric acid is used to rinse the content of the boat into an Xpress microwave oven vessel (20 mL). A sample is then subjected to microwave-assisted acid digestion using MARS 6 laboratory microwave unit with ramping to 150 °C within 20 minutes and a hold phase at 150 °C for 35 minutes. The digested sample is allowed to cool down to room temperature and then transferred into a plastic 100 mL volumetric flask. Standard solutions containing 1000 mg/L Yttrium (0.4 mL) are added. The flask is then filled up with distilled water and shaken. The solution is filtered through 0.45 µm Nylon syringe filters and subjected to analysis using Thermo iCAP 6300 ICP-OES and iTEVA software.

The instrument is calibrated for Al and Zr using a blank (a solution of 5 % HNO3, prepared from concentrated Nitric acid) and six standards of 0.005 mg/L, 0.01 mg/L, 0.1 mg/L, 1 mg/L, 10 mg/L and 100 mg/L of Al and Zr in solutions. The solutions contain 5 % HNO3 (from concentrated nitric acid), 4 mg/L of Y standard in distilled water. Plastic volumetric flasks are used. Curvilinear fitting and 1/concentration weighting are used for the calibration curves. Immediately before analysis, the calibration is verified and adjusted (instrument re-slope function) using the blank and the 10 mg/L Al and Zr standard which has 4 mg/L Y and 5 % HNO3, from concentrated nitric acid, in distilled water. A quality control sample (QC: 1 mg/L Al; 2 mg/L Zr and 4 mg/L Y in a solution of 5 % HNO3, from concentrated nitric acid, in distilled water) is run to confirm the re-slope. The QC sample is also run at the end of a scheduled analysis set.

The content for Zr is monitored using the 339.198 nm line. The content of Al is monitored via the 394.401 nm line. The Y 371.030 nm is used as the internal standard. The reported values are calculated back to the original catalyst sample using the original mass of the catalyst aliquot and the dilution volume.

### Crushing strength

The crushing strength of the materials in the examples was determined using a MCT-510 micro-compressive tester by Shimadzu Corporation. The sample material was dispersed on lower compression plate, from where isolated particles were located and selected for measurements using optical microscope. The diameter of the particle was measured using microscope software tools. The selected sample particle was compressed with constantly increasing loading force until the particle breaks or set maximum force is reached. The crushing strength of the material was determined by the maximum compressive load at the point of particle breaking and the particle diameter. The measurements were performed in inert conditions with load speed 0.4462 mN/sec and the maximum load was 40 mN. The crushing strength of 10 randomly selected particles was measured and the average value was reported as the compressive strength after removal of statistical outliers.

Weibull distribution analysis was performed from the individual particles data by using a commercial statistical analysis software such as MiniTab, Excel or Origin.

### Parallel Pressure Reactor (PPR) polymerisation experiments

The PPR reactors were pre-conditioned by flushing with 80 psi of ethylene for ten times. After the flushing, the reactors were left unpressurized.

5 µmol of TIBA was added as scavenger together with a precise amount of comonomer to reach a C₆/C₂ ratio of 50 mol/kmol at the polymerisation step. Heptane was added to the reactors to reach a total volume of 4.1 ml. The solvent addition was done at the glovebox ambient temperature of around 26 °C. Then, the reactors were pressurized to 40 psi using ethylene in order to check for leaks. After the leaks were fixed, the reactor stirring was initiated and the reactor pressures were controlled at 40 psi for 3 minutes in order to stabilize the ethylene concentration in the liquid phase.

Reactor temperatures were ramped to the 85 °C polymerisation temperature and the temperatures and pressures were allowed to stabilize to reach a steady state. After this the pressure control was turned on and the reactors were pressurized to the final polymerisation pressure. Reactor conditions were let to stabilize and after a steady state was reached once more, catalysts were injected into the reactors along with heptane to reach a total liquid volume of 5 ml.

The reactor pressures were controlled considering the operating pressure set points and the monomer uptake rate was monitored for each reactor. The polymerisation step lasted for 60 minutes for each reactor after which the reactions were quenched with CO₂.

The activity is reported as the average of 6 to 8 individual polymerisation. The standard deviation (StDev) and the coefficient of variation (CoefVar) were determined with a standard statistical analysis software like MiniTab or Origin as reported in Table 2.

**Table 2. Activity**

| Example | Number of replicas | Mean of activity (kg(polymer) / g(catalyst)×h) | StDev | CoefVar |
|---|---|---|---|---|
| E1 | 7 | 0.88 | 0.14 | 16.45 |
| E2 | 7 | 0.84 | 0.11 | 12.71 |
| E3 | 8 | 0.85 | 0.08 | 9.91 |
| E4 | 8 | 0.89 | 0.07 | 8.30 |
| E5 | 6 | 0.88 | 0.06 | 6.81 |

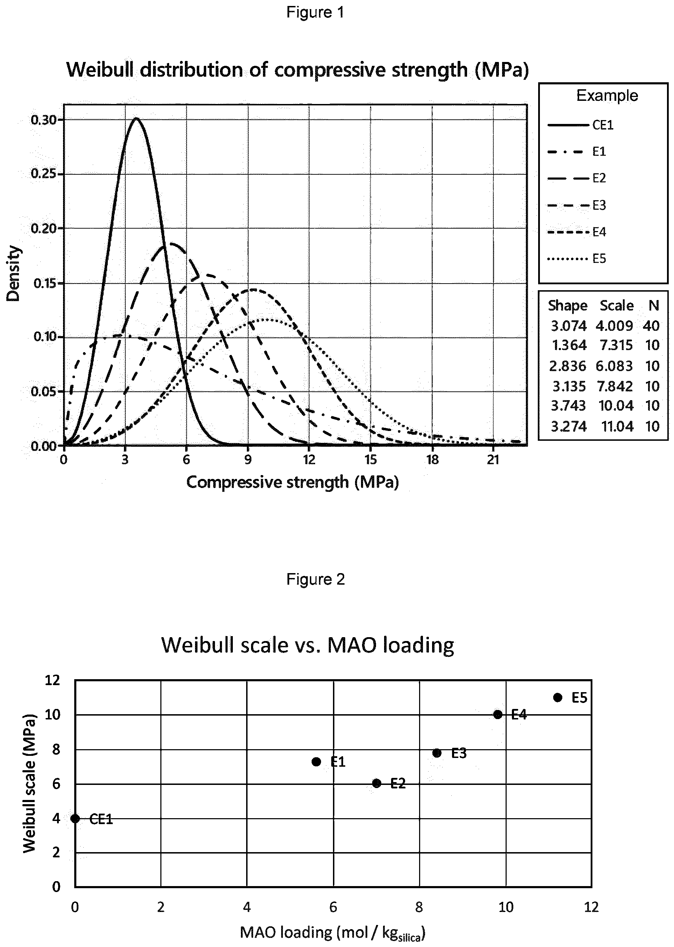

The Weibull distributions displayed in Figure 1 indicate that catalyst E1 prepared with the lowest loading of methylaluminoxane of the series exhibits a tendency to break preferably under low compressive stress level which is reflected by the low Weibull modulus of 1.36 and is indicative of a high amount of structural defects and high inhomogeneity of interparticle structural defects distribution.

Figure 2 shows that addition of the catalyst components to the silica porous carrier (CE1) increases the catalyst particle compressive strength, and that higher loadings of methylaluminoxane results in an increased compressive strength (E1 to E5). During the catalyst preparation, the MAO fills up the voids present in the porous silica particles as disclosed in WO2018212852A1, WO2016176135A1 or WO201875071A1. The catalyst composition with high MAO content sees a decrease in the density of structural defects which results in the increased mechanical strength of the catalyst particles.

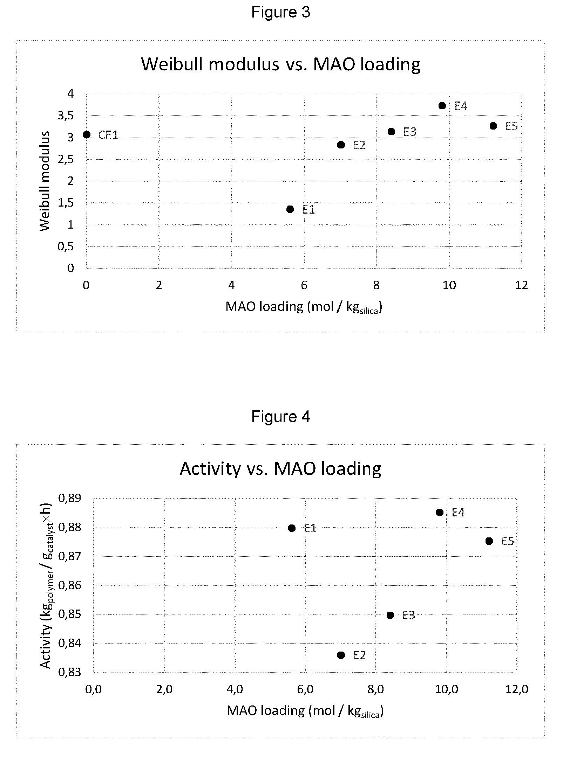

Figure 3 on the other hand confirms the initial observation from the Weibull distribution in Figure 1: the Weibull modulus of the catalyst particles at lower methylaluminoxane loadings is lower than the Weibull modulus of the starting support material (E1 to E3 compared to CE1). This is indicative that at lower loadings there is not enough methylaluminoxane present in the reactor to fill up the total amount of voids inside the support particles which results in inter-particles non-homogeneous distribution of structural defects in the final catalyst compositions, in comparison to the initial inter-particles structural defects distribution of the starting support material.

The catalyst compositions E1-E5 were further used for the polymerisation of ethylene in the presence of 1-hexene as the comonomer in a parallel pressurised reactor (PPR). The polymerisation activity is reported as the average of 6 to 8 replicates of the same polymerisation experiment for each of the catalyst compositions. Figure 4 shows that in contradiction to the teaching from US7244785B2, methylaluminoxane loading do not necessarily correlates with higher polymerisation activity.

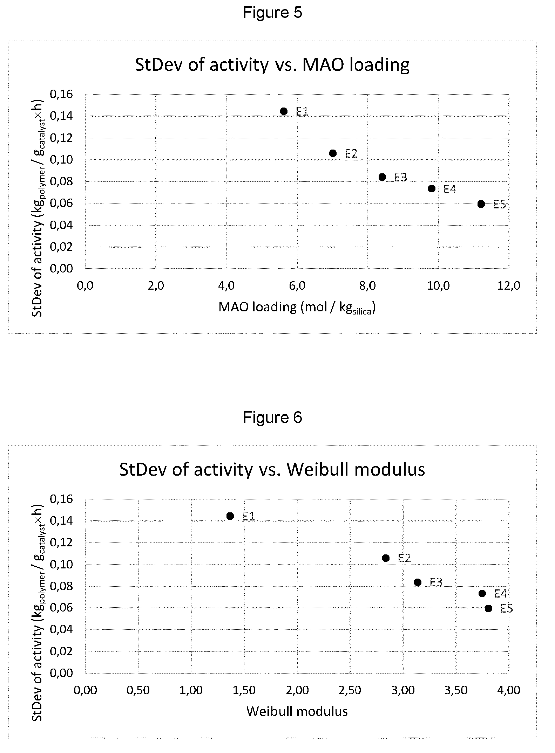

On the other hand, Figure 5 and Figure 6 clearly show that the variation in activity over the set of 6-8 polymerisation replicates for each catalyst composition E1-E5, as represented by the standard deviation of the polymerisation activity, correlates with the loading of methylaluminoxane (Figure 5) and in turn with the Weibull modulus of the catalyst compressive strength (Figure 6). It can be safely inferred that a higher loading of methylaluminoxane during the catalyst preparation promotes a more homogeneous inter-particles distribution of structural defects within the catalyst particles population which in turns provides a more reliable polymerisation behaviour with lower variation within a series of successive polymerisation experiments.

The correlation built between the catalyst particles compressive strength Weibull parameters and the standard deviation observed from the PPR polymerisation experiments are meant to exemplify the possibilities offered by micro-compression testing catalyst particles characterisation method and the Weibull analysis of the resulting data to better understand the relationship between the catalyst preparation parameters and its performance during the polymerisation reaction. Other correlations can be built with polymer powder descriptors such as bulk density of particle size distribution, or kinetic parameters of the polymerisation reaction.

## Claims

1. A method for determining the compressive character of an olefin polymerisation catalyst, comprising:
(a) subjecting particles of an olefin polymerisation catalyst to micro-compression testing to obtain crushing strength data of the particles of the olefin polymerisation catalyst and calculating the average value of the measurements to obtain the compressive strength of the olefin polymerisation catalyst; and
(b) obtaining Weibull parameters of the olefin polymerisation catalyst by performing a Weibull distribution analysis of the crushing strength data to determine the compressive character of the olefin polymerisation catalyst.

2. A method as claimed in any one of claims 1 , comprising
(a) measuring the crushing strength of at least 10 randomly selected individual particles within a sample population of the olefin polymerisation catalyst with a microcompression tester and calculating the average value as the compressive strength of the olefin polymerisation catalyst; and
(b) deriving the scale parameter of the Weibull distribution and Weibull modulus of the Weibull distribution from the crushing strength data measured in step (a)
to determine the compressive character of the olefin polymerisation catalyst.

3. A method as claimed in claim 1 or 2, wherein the crushing strength is measured by a compression tester, preferably a micro-compression tester, more preferably a microcompression tester operated under inert conditions.

4. A method as claimed in any one of claims 1 to 3, wherein the olefin polymerisation catalyst comprises (i) a transition metal complex, (ii) a cocatalyst, and (iii) optionally a support, preferably comprising a support, the support material being selected from clay and inorganic oxide, preferably from a group consisting of ion-exchange layered silicate, silica, alumina, silica-alumina and titanium oxide.

5. A method for evaluating the quality of an olefin polymerisation catalyst, comprising (o) determining the compressive character of the olefin polymerisation catalyst as claimed in any one of claims 1 to 4, and
(p) evaluating the quality of the olefin polymerisation catalyst from the information obtained from the determination of its compressive strength by:
(p1) deriving a Weibull modulus and a Weibull scale parameter for the olefin polymerisation catalyst by measuring the individual crushing strength of at least 10 randomly selected individual particles within a sample population of the olefin polymerisation catalyst with a micro-compression tester, and performing a Weibull distribution analysis of the obtained crushing strength data; and
(p2) comparing the Weibull modulus and/or the Weibull scale parameter to respective predetermined target values to evaluate the quality of the olefin polymerisation catalyst;
wherein quality refers to its ability to perform acceptably in an olefin polymerisation process.

6. A method for evaluating the quality of an olefin polymerisation catalyst as claimed in claim 5, further comprising
(q) estimating the inter-particles distribution of structural defects in particles of the olefin catalyst from the Weibull distribution analysis, wherein the structural defects can be described in terms of pore structure, pore size and/or pore size distribution. r

7. A method for evaluating the quality of an olefin polymerisation catalyst as claimed in any one of claim 5 to 6, comprising
(r) establishing relationship between one or more of the compressive strength descriptors, of the analysed polymerisation catalyst, such as compressive strength or one or more parameters of the Weibull analysis (e.g. the Weibull modulus), and one or more polymerisation performance indicators, preferably variation in polymerisation activity; or
(s) establishing relationship between one or more compressive strength descriptors of the analysed polymerisation catalyst, such as compressive strength or one or more parameters of the Weibull analysis (e.g. the Weibull modulus), and one or more characteristics of a polymer powder obtained by polymerising olefin monomers with the analysed polymerisation catalyst; wherein the relationship in steps (r) and (s) refers to a circumstantial and/or casual connection and/or correlation between the referred characteristic of the olefin polymerisation catalyst and/or polymerisation performance indicator.

8. A method for evaluating the quality of an olefin polymerisation catalyst as claimed in claim 6 or 7 wherein the compressive strength descriptor is the Weibull modulus.

9. A method for predicting the performance of an olefin polymerisation catalyst in an olefin polymerisation process
wherein the method comprises
(x) determining the compressive character of the olefin polymerisation catalyst by a method as claimed in any one of claims 1 to 4; and
(y) predicting the performance of the olefin polymerisation catalyst by evaluating the information obtained from the determination of its compressive character; wherein the performance is the polymerisation activity of the olefin polymerisation catalyst and/or the variation in polymerisation activity for a number of repeats of the polymerisation experiment.

10. A method for predicting the performance of an olefin polymerisation catalyst in a polymerisation reaction as claimed in claim 9, wherein the method is used to predict the characteristics of the polymer powder obtained by polymerising olefin monomers with the olefin polymerisation catalyst.

11. A method for predicting the performance of an olefin polymerisation catalyst as claimed in claim any one of claims 9 or 10, comprising
(y1) establishing relationship between the catalyst compressive strength descriptors such as compressive strength or Weibull parameters and one or more characteristics of the physical and/or mechanical properties of the polymerisation catalyst; and predicting the performance the olefin polymerisation catalyst by evaluating the information obtained from the said relationship.

12. A method for predicting performance of an olefin polymerisation catalyst as claimed in any one of claims 9 to 11, comprising
(y2) evaluating the quality of an olefin polymerisation catalyst as claimed in any one of claims 7 to 11 and predicting the performance of the olefin polymerisation catalyst based on information obtained from evaluating the quality of the olefin polymerisation catalyst.

13. A method for predicting performance of an olefin polymerisation catalyst as claimed in any one of claims 9 to 12 comprising
(y3) performing a Weibull distribution analysis of the crushing strength data; and comparing one or more parameters or any combination thereof of the Weibull distribution to predetermined target values to predict the performance of the olefin polymerisation catalyst.

14. An olefin polymerisation catalyst, having a compressive strength of at least 5 MPa, as measured with a micro-compression tester, preferably at least 7 MPa, more preferably from 7 to 15 MPa and.having a Weibull modulus higher than 2, preferably higher than 2.5, more preferably higher than 3, typically from 2 to 10, preferably from 2.5 to 8.5, even more preferably from 3 to 8, wherein the compressive strength is the average value of the crushing strength of 10 randomly selected catalyst particles after the removal of statistical outliers, and wherein the Weibull modulus is derived from the Weibull distribution analysis of the compressive strength;
wherein the olefin polymerisation catalyst comprises (i) a transition metal complex, (ii) a cocatalyst, and (iii) a support, preferably a silica support;
and the cocatalyst (ii) is an aluminium containing compound of formula (ii-I): 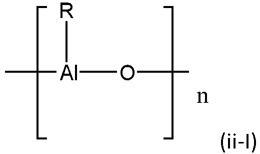
where n is from 6 to 20 and R is C1-C10-alkyl, preferably C1-C5-alkyl, or C3-C10-cycloalkyl, C7-C12-arylalkyl or -alkylaryl and/or phenyl or naphthyl;
preferably MAO; and
the transition metal complex (i) has the following formula (i-II): 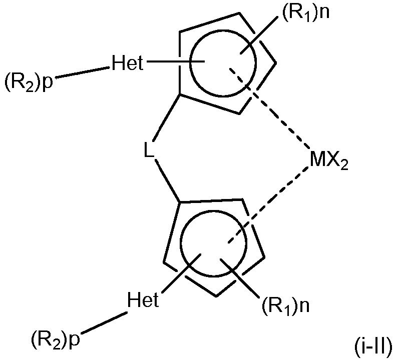
wherein each X is independently a halogen atom, a C1-6-alkyl, C1-6-alkoxy group, phenyl or benzyl group;
each Het is independently a monocyclic heteroaromatic containing at least one heteroatom selected from O or S;
L is -R'2Si-, wherein each R' is independently C1-20 hydrocarbyl or C1-10 alkyl substituted with alkoxy having 1 to 10 carbon atoms;
M is Ti, Zr or Hf;
each R₁ is the same or different and is a C1-6 alkyl group or C1-6 alkoxy group;
each n is 1 to 2;
each R₂ is the same or different and is a C1-6 alkyl group, C1-6 alkoxy group or -Si(R)3 group;
each R is C1-10 alkyl or phenyl group optionally substituted by 1 to 3 C1-6 alkyl groups; and
each p is 0 to 1.

15. An olefin polymerisation catalyst as claimed in claim 14, having a Weibull scale parameter higher than 6 MPa, preferably higher than 7 MPa, more preferably higher than 8 MPa, typically from 6 to 20 MPa, preferably from 7 to 18 MPa, more preferably from 8 to 15 MPa, wherein the Weibull scale parameter is derived from the Weibull distribution analysis of the compressive strength.

## Patentansprüche

1. Verfahren zur Bestimmung der Kompressionscharakteristik eines Olefinpolymerisationskatalysators, umfassend:
(a) Unterziehen von Partikeln eines Olefinpolymerisationskatalysators einer Mikrokompressionsprüfung, um Druckfestigkeitsdaten der Partikel des Olefinpolymerisationskatalysators zu erhalten, und Berechnen des Durchschnittswerts der Messungen, um die Kompressionsfestigkeit des Olefinpolymerisationskatalysators zu erhalten; und
(b) Erhalten von Weibull-Parametern des Olefinpolymerisationskatalysators durch Durchführen einer Weibull-Verteilungsanalyse der Druckfestigkeitsdaten, um die Kompressionscharakteristik des Olefinpolymerisationskatalysators zu bestimmen.

2. Verfahren nach einem der Ansprüche 1, umfassend
(a) das Messen der Druckfestigkeit von mindestens 10 zufällig ausgewählten Einzelpartikeln innerhalb einer Probenpopulation des Olefinpolymerisationskatalysators mit einem Mikrokompressions-Prüfgerät und Berechnen des Durchschnittswerts als Kompressionsfestigkeit des Olefinpolymerisationskatalysators; und
(b) Ableiten des Skalierungsparameters der Weibull-Verteilung und des Weibull-Moduls der Weibull-Verteilung aus den in Schritt (a) gemessenen Druckfestigkeitsdaten, um die Kompressionscharakteristik des Olefinpolymerisationskatalysators zu bestimmen.

3. Verfahren nach Anspruch 1 oder 2, wobei die Druckfestigkeit mit einem Kompressions-Prüfgerät gemessen wird, bevorzugt einem Mikrokompressions-Prüfgerät, bevorzugter einem Mikrokompressions-Prüfgerät, das unter inerten Bedingungen betrieben wird.

4. Verfahren nach einem der Ansprüche 1 bis 3, wobei der Olefinpolymerisationskatalysator (i) einen Übergangsmetallkomplex, (ii) einen Cokatalysator und (iii) optional einen Träger umfasst, bevorzugt umfassend einen Träger, wobei das Trägermaterial aus Ton und anorganischem Oxid ausgewählt ist, bevorzugt aus einer Gruppe bestehend aus ionentauschendem Schichtsilikat, Siliciumdioxid, Aluminiumoxid, Siliciumdioxid-Aluminiumoxid und Titanoxid.

5. Verfahren zur Bewertung der Qualität eines Olefinpolymerisationskatalysators, umfassend
(o) Bestimmen der Kompressionscharakteristik des Olefinpolymerisationskatalysators nach einem der Ansprüche 1 bis 4, und
(p) Bewertung der Qualität des Olefinpolymerisationskatalysators anhand der Informationen, die aus der Bestimmung seiner Kompressionsfestigkeit gewonnen wurden, durch:
(p1) Ableitung eines Weibull-Moduls und eines Weibull-Skalierungsparameters für den Olefinpolymerisationskatalysator durch Messung der individuellen Druckfestigkeit von mindestens 10 zufällig ausgewählten Einzelpartikeln innerhalb einer Probenpopulation des Olefinpolymerisationskatalysators mit einem Mikrokompressions-Prüfgerät, und Durchführung einer Weibull-Verteilungsanalyse der erhaltenen Druckfestigkeitsdaten; und
(p2) Vergleichen des Weibull-Moduls und/oder des Weibull-Skalierungsparameters mit den jeweiligen vorgegebenen Zielwerten, um die Qualität des Olefinpolymerisationskatalysators zu bewerten;
wobei sich Qualität auf seine Fähigkeit bezieht, in einem Olefinpolymerisationsprozess akzeptable Leistungen zu erbringen.

6. Verfahren zur Bewertung der Qualität eines Olefinpolymerisationskatalysators nach Anspruch 5, weiter umfassend
(q) das Schätzen der Verteilung von Strukturdefekten zwischen Partikeln in Partikeln des Olefinkatalysators anhand der Weibull-Verteilungsanalyse, wobei die Strukturdefekte anhand der Porenstruktur, der Porengröße und/oder der Porengrößenverteilung beschrieben werden können. r

7. Verfahren zur Bewertung der Qualität eines Olefinpolymerisationskatalysators nach einem der Ansprüche 5 bis 6, umfassend
(r) das Herstellen einer Beziehung zwischen einem oder mehreren der Kompressionsfestigkeitsdeskriptoren, des analysierten Polymerisationskatalysators, wie beispielsweise der Kompressionsfestigkeit oder einem oder mehreren Parametern der Weibull-Analyse (z. B. dem Weibull-Modul), und einem oder mehreren Polymerisationsleistungsindikatoren, bevorzugt der Variation der Polymerisationsaktivität; oder
(s) das Herstellen einer Beziehung zwischen einem oder mehreren Kompressionsfestigkeitsdeskriptoren des analysierten Polymerisationskatalysators, wie beispielsweise der Kompressionsfestigkeit oder einem oder mehreren Parametern der Weibull-Analyse (z. B. dem Weibull-Modul), und einer oder mehreren Eigenschaften eines Polymerpulvers, das durch Polymerisation von Olefinmonomeren mit dem analysierten Polymerisationskatalysator erhalten wurde; wobei sich die Beziehung in den Schritten (r) und (s) auf einen umständlichen und/oder zufälligen Zusammenhang und/oder eine Korrelation zwischen dem genannten Merkmal des Olefinpolymerisationskatalysators und/oder dem Polymerisationsleistungsindikator bezieht.

8. Verfahren zur Bewertung der Qualität eines Olefinpolymerisationskatalysators nach Anspruch 6 oder 7, wobei der Kompressionsfestigkeitsdeskriptor das Weibull-Modul ist.

9. Verfahren zum Vorhersagen der Leistung eines Olefinpolymerisationskatalysators in einem Olefinpolymerisationsprozess
wobei das Verfahren Folgendes umfasst
(x) Bestimmen der Kompressionscharakteristik des Olefinpolymerisationskatalysators durch ein Verfahren nach einem der Ansprüche 1 bis 4; und
(y) Vorhersagen der Leistung des Olefinpolymerisationskatalysators durch Auswerten der Informationen, die aus der Bestimmung seiner Kompressionscharakteristik gewonnen wurden; wobei die Leistung die Polymerisationsaktivität des Olefinpolymerisationskatalysators und/oder die Variation der Polymerisationsaktivität für eine Anzahl von Wiederholungen des Polymerisationsexperiments ist.

10. Verfahren zum Vorhersagen der Leistung eines Olefinpolymerisationskatalysators in einer Polymerisationsreaktion nach Anspruch 9, wobei das Verfahren zum Vorhersagen der Eigenschaften des Polymerpulvers verwendet wird, das durch Polymerisation von Olefinmonomeren mit dem Olefinpolymerisationskatalysator erhalten wird.

11. Verfahren zum Vorhersagen der Leistung eines Olefinpolymerisationskatalysators nach einem der Ansprüche 9 oder 10, umfassend
(y1) das Herstellen einer Beziehung zwischen den Kompressionsfestigkeitsdeskriptoren des Katalysators, wie beispielsweise der Kompressionsfestigkeit oder den Weibull-Parametern, und einer oder mehreren Eigenschaften der physikalischen und/oder mechanischen Eigenschaften des Polymerisationskatalysators; und Vorhersagen der Leistung des Olefinpolymerisationskatalysators durch Auswerten der aus der genannten Beziehung gewonnenen Informationen.

12. Verfahren zum Vorhersagen der Leistung eines Olefinpolymerisationskatalysators nach einem der Ansprüche 9 bis 11, umfassend
(y2) das Bewerten der Qualität eines Olefinpolymerisationskatalysators nach einem der Ansprüche 7 bis 11 und Vorhersagen der Leistung des Olefinpolymerisationskatalysators auf der Grundlage von Informationen, die durch Bewerten der Qualität des Olefinpolymerisationskatalysators erhalten wurden.

13. Verfahren zum Vorhersagen der Leistung eines Olefinpolymerisationskatalysators nach einem der Ansprüche 9 bis 12, umfassend
(y3) das Durchführen einer Weibull-Verteilungsanalyse der Druckfestigkeitsdaten; und das Vergleichen eines oder mehrerer Parameter oder einer beliebigen Kombination davon der Weibull-Verteilung mit vorbestimmten Zielwerten, um die Leistung des Olefinpolymerisationskatalysators vorherzusagen.

14. Olefinpolymerisationskatalysator aufweisend eine Kompressionsfestigkeit von mindestens 5 MPa, gemessen mit einem Mikrokompressions-Prüfgerät, bevorzugt mindestens 7 MPa, bevorzugter von 7 bis 15 MPa, und mit einem Weibull-Modul von mehr als 2, bevorzugt mehr als 2,5, bevorzugter mehr als 3, typischerweise von 2 bis 10, bevorzugt von 2,5 bis 8,5, noch bevorzugter von 3 bis 8, wobei die Kompressionsfestigkeit der Durchschnittswert der Druckfestigkeit von 10 zufällig ausgewählten Katalysatorpartikeln nach Entfernung statistischer Ausreißer ist und wobei das Weibull-Modul aus der Weibull-Verteilungsanalyse der Kompressionsfestigkeit abgeleitet wird;
wobei der Olefinpolymerisationskatalysator (i) einen Übergangsmetallkomplex, (ii) einen Cokatalysator und (iii) einen Träger, bevorzugt einen Siliciumdioxidträger, umfasst;
und der Cokatalysator (ii) eine aluminiumhaltige Verbindung der Formel (ii-I) ist: 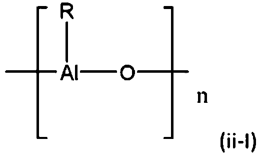
wobei n zwischen 6 und 20 liegt und R C1-C10-Alkyl, bevorzugt C1-C5-Alkyl, oder C3-C10-Cycloalkyl, C7-C12-Arylalkyl oder -Alkylaryl und/oder Phenyl oder Naphthyl ist; bevorzugt MAO; und
der Übergangsmetallkomplex (i) die folgende Formel (i-II) aufweist: 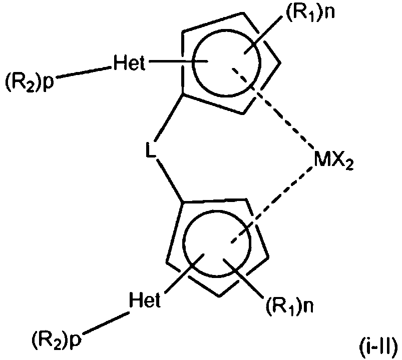
wobei jedes X unabhängig voneinander ein Halogenatom, ein C1-6-Alkyl, eine C1-6-Alkoxygruppe, eine Phenyl- oder Benzylgruppe ist;
jedes Het ist unabhängig voneinander ein monozyklischer Heteroaromat ist, der mindestens ein Heteroatom enthält, das aus O oder S ausgewählt ist;
L -R'2Si- ist, wobei jedes R' unabhängig voneinander C1-20-Hydrocarbyl oder C1-10-Alkyl ist, substituiert mit Alkoxy, das 1 bis 10 Kohlenstoffatome aufweist;
M Ti, Zr oder Hf ist;
jedes R₁ gleich oder unterschiedlich ist und eine C1-6-Alkylgruppe oder eine C1-6-Alkoxygruppe ist;
jedes n 1 bis 2 ist;
jedes R₂ gleich oder unterschiedlich ist und eine C1-6-Alkylgruppe, eine C1-6-Alkoxygruppe oder eine -Si(R)3-Gruppe ist;
jedes R eine C1-10-Alkyl- oder Phenylgruppe ist, die optional mit 1 bis 3 C1-6-Alkylgruppen substituiert ist; und
jedes p 0 bis 1 ist.

15. Olefinpolymerisationskatalysator nach Anspruch 14, aufweisend einen Weibull-Skalierungsparameter von mehr als 6 MPa, bevorzugt mehr als 7 MPa, bevorzugter mehr als 8 MPa, typischerweise von 6 bis 20 MPa, bevorzugt von 7 bis 18 MPa, bevorzugter von 8 bis 15 MPa, wobei der Weibull-Skalierungsparameter aus der Weibull-Verteilungsanalyse der Kompressionsfestigkeit abgeleitet wird.

## Revendications

1. Procédé de détermination du caractère compressif d'un catalyseur de polymérisation d'oléfines, comprenant :
(a) la soumission de particules d'un catalyseur de polymérisation d'oléfines à des essais de microcompression pour obtenir des données de résistance à l'écrasement des particules du catalyseur de polymérisation d'oléfines et le calcul de la valeur moyenne des mesures pour obtenir la résistance compressive du catalyseur de polymérisation d'oléfines ; et
(b) l'obtention de paramètres de Weibull du catalyseur de polymérisation d'oléfines par la réalisation d'une analyse de la distribution de Weibull des données de résistance à l'écrasement pour déterminer le caractère compressif du catalyseur de polymérisation d'oléfines.

2. Procédé tel que revendiqué dans l'une quelconque des revendications 1, comprenant
(a) la mesure de la résistance à l'écrasement d'au moins 10 particules individuelles aléatoirement sélectionnées à l'intérieur d'une population échantillon du catalyseur de polymérisation d'oléfines avec un testeur de microcompression et le calcul de la valeur moyenne comme la résistance compressive du catalyseur de polymérisation d'oléfines ; et
(b) la dérivation du paramètre d'échelle de la distribution de Weibull et du module de Weibull de la distribution de Weibull à partir des données de résistance à l'écrasement mesurées à l'étape (a)
pour déterminer le caractère compressif du catalyseur de polymérisation d'oléfines.

3. Procédé tel que revendiqué dans la revendication 1 ou la revendication 2, dans lequel la résistance à l'écrasement est mesurée par un testeur de compression, de préférence un testeur de microcompression, plus de préférence un testeur de microcompression fonctionnant dans des conditions inertes.

4. Procédé tel que revendiqué dans l'une quelconque des revendications 1 à 3, dans lequel le catalyseur de polymérisation d'oléfines comprend (i) un complexe de métal de transition, (ii) un cocatalyseur, et (iii) facultativement un support, comprenant de préférence un support, le matériau de support étant sélectionné parmi une argile et un oxyde inorganique, de préférence parmi un groupe consistant en silicate en couches à échange d'ions, silice, alumine, silice-alumine et oxyde de titane.

5. Procédé d'évaluation de la qualité d'un catalyseur de polymérisation d'oléfines, comprenant
(o) la détermination du caractère compressif du catalyseur de polymérisation d'oléfines tel que revendiqué dans l'une quelconque des revendications 1 à 4, et
(p) l'évaluation de la qualité du catalyseur de polymérisation d'oléfines à partir des informations obtenues à partir de la détermination de sa résistance compressive par :
(p1) la dérivation d'un module de Weibull et d'un paramètre d'échelle de Weibull pour le catalyseur de polymérisation d'oléfines par la mesure de la résistance à l'écrasement individuelle d'au moins 10 particules individuelles aléatoirement sélectionnées à l'intérieur d'une population échantillon du catalyseur de polymérisation d'oléfines avec un testeur de microcompression, et la réalisation d'une analyse de la distribution de Weibull des données de résistance à l'écrasement obtenues ; et
(p2) la comparaison du module de Weibull et/ou du paramètre d'échelle de Weibull à des valeurs cibles prédéterminées respectives pour évaluer la qualité du catalyseur de polymérisation d'oléfines ;
dans lequel la qualité fait référence à sa capacité à atteindre une performance acceptable dans un processus de polymérisation d'oléfines.

6. Procédé d'évaluation de la qualité d'un catalyseur de polymérisation d'oléfines tel que revendiqué dans la revendication 5, comprenant en outre
(q) l'estimation de la distribution inter-particules de défauts structurels dans des particules du catalyseur de polymérisation d'oléfines à partir de l'analyse de la distribution de Weibull, dans lequel les défauts structurels peuvent être décrits en termes de structure de pores, de taille de pores et/ou de distribution de taille de pores. r

7. Procédé d'évaluation de la qualité d'un catalyseur de polymérisation d'oléfines tel que revendiqué dans l'une quelconque des revendications 5 à 6, comprenant
(r) l'établissement d'une relation entre un ou plusieurs des descripteurs de résistance compressive, du catalyseur de polymérisation analysé, tels que la résistance compressive ou un ou plusieurs paramètres de l'analyse de Weibull (p. ex., le module de Weibull), et un ou plusieurs indicateurs de performance de polymérisation, de préférence une variation de l'activité de polymérisation ; ou
(s) l'établissement d'une relation entre un ou plusieurs descripteurs de résistance compressive du catalyseur de polymérisation analysé, tels que la résistance compressive ou un ou plusieurs paramètres de l'analyse de Weibull (p. ex., le module de Weibull), et une ou plusieurs caractéristiques d'une poudre de polymère obtenue par polymérisation de monomères d'oléfines avec le catalyseur de polymérisation analysé ;
dans lequel la relation des étapes (r) et (s) fait référence à un lien et/ou une corrélation accidentel(le) et/ou fortuit(e) entre la caractéristique référencée du catalyseur de polymérisation d'oléfines et/ou un indicateur de performance de polymérisation.

8. Procédé d'évaluation de la qualité d'un catalyseur de polymérisation d'oléfines tel que revendiqué dans la revendication 6 ou la revendication 7 dans lequel le descripteur de résistance compressive est le module de Weibull.

9. Procédé de prédiction de la performance d'un catalyseur de polymérisation d'oléfines dans un processus de polymérisation d'oléfines
dans lequel le procédé comprend
(x) la détermination du caractère compressif du catalyseur de polymérisation d'oléfines par un procédé tel que revendiqué dans l'une quelconque des revendications 1 à 4 ; et
(y) la prédiction de la performance du catalyseur de polymérisation d'oléfines par l'évaluation des informations obtenues à partir de la détermination de son caractère compressif ; dans lequel la performance est l'activité de polymérisation du catalyseur de polymérisation d'oléfines et/ou la variation de l'activité de polymérisation pour un certain nombre de répétitions de l'expérience de polymérisation.

10. Procédé de prédiction de la performance d'un catalyseur de polymérisation d'oléfines dans une réaction de polymérisation tel que revendiqué dans la revendication 9, dans lequel le procédé est utilisé pour prédire les caractéristiques de la poudre de polymère obtenue par polymérisation de monomères d'oléfines avec le catalyseur de polymérisation d'oléfines.

11. Procédé de prédiction de la performance d'un catalyseur de polymérisation d'oléfines tel que revendiqué dans l'une quelconque de la revendication 9 ou de la revendication 10, comprenant
(y1) l'établissement d'une relation entre les descripteurs de résistance compressive du catalyseur tels que la résistance compressive ou des paramètres de Weibull et une ou plusieurs caractéristiques des propriétés mécaniques et/ou physiques du catalyseur de polymérisation ; et la prédiction de la performance du catalyseur de polymérisation d'oléfines par l'évaluation des informations obtenues à partir de ladite relation.

12. Procédé de prédiction de la performance d'un catalyseur de polymérisation d'oléfines tel que revendiqué dans l'une quelconque des revendications 9 à 11, comprenant
(y2) l'évaluation de la qualité d'un catalyseur de polymérisation d'oléfines tel que revendiqué dans l'une quelconque des revendications 7 à 11 et la prédiction de la performance du catalyseur de polymérisation d'oléfines sur la base d'informations obtenues à partir de l'évaluation de la qualité du catalyseur de polymérisation d'oléfines.

13. Procédé de prédiction de la performance d'un catalyseur de polymérisation d'oléfines tel que revendiqué dans l'une quelconque des revendications 9 à 12 comprenant
(y3) la réalisation d'une analyse de la distribution de Weibull des données de résistance à l'écrasement ; et la comparaison d'un ou de plusieurs paramètres ou d'une combinaison quelconque de ceux-ci de la distribution de Weibull à des valeurs cibles prédéterminées pour prédire la performance du catalyseur de polymérisation d'oléfines.

14. Catalyseur de polymérisation d'oléfines, présentant une résistance compressive d'au moins 5 MPa, telle que mesurée avec un testeur de microcompression, de préférence au moins 7 MPa, plus de préférence de 7 à 15 MPa, et présentant un module de Weibull supérieur à 2, de préférence supérieur à 2,5, plus de préférence supérieur à 3, généralement de 2 à 10, de préférence de 2,5 à 8,5, encore plus de préférence de 3 à 8,
dans lequel la résistance compressive est la valeur moyenne de la résistance à l'écrasement de 10 particules de catalyseur aléatoirement sélectionnées après le retrait des valeurs aberrantes statistiques, et dans lequel le module de Weibull est dérivé de l'analyse de la distribution de Weibull de la résistance compressive ;
dans lequel le catalyseur de polymérisation d'oléfines comprend (i) un complexe de métal de transition, (ii) un cocatalyseur, et (iii) un support, de préférence un support en silice ;
et le cocatalyseur (ii) est un composé contenant de l'aluminium de formule (ii-I) : 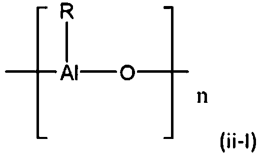
où n est compris entre 6 et 20 et R est un alkyle en C1-C10, de préférence un alkyle en C1-C5, ou un cycloalkyle en C3-C10, un arylalkyle ou alkylaryle en C7-C12 et/ou un phényle ou un naphtyle ;
de préférence MAO ; et
le complexe de métal de transition (i) présente la formule (i-II) suivante : 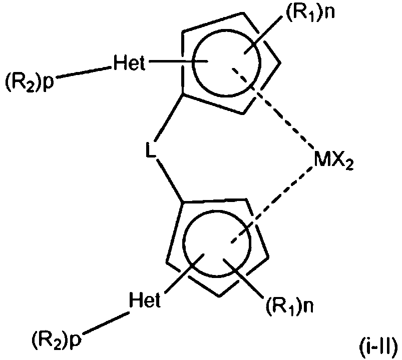
dans lequel chaque X est indépendamment un atome d'halogène, un alkyle en C1-6, un groupe alcoxy en C1-6, un groupe phényle ou un groupe benzyle ;
chaque Het est indépendamment un groupe hétéroaromatique monocyclique contenant au moins un hétéroatome sélectionné parmi O ou S ;
L est -R'2Si-, dans lequel chaque R' est indépendamment un hydrocarbyle en C1-20 ou un alkyle en C1-10 substitué par un alcoxy présentant 1 à 10 atomes de carbone ;
M est Ti, Zr ou Hf ;
chaque R₁ est identique ou différent et est un groupe alkyle en C1-6 ou un groupe alcoxy en C1-6 ;
chaque n est 1 à 2 ;
chaque R₂ est identique ou différent et est un groupe alkyle en C1-6, un groupe alcoxy en C1-6 ou un groupe -Si(R)3 ;
chaque R est un groupe alkyle en C1-10 ou un groupe phényle facultativement substitué par 1 à 3 groupes alkyle en C1-6 ; et
chaque p est 0 à 1.

15. Catalyseur de polymérisation d'oléfines tel que revendiqué dans la revendication 14, présentant un paramètre d'échelle de Weibull supérieur à 6 MPa, de préférence supérieur à 7 MPa, plus de préférence supérieur à 8 MPa, généralement de 6 à 20 MPa, de préférence de 7 à 18 MPa, plus de préférence de 8 à 15 MPa, dans lequel le paramètre d'échelle de Weibull est dérivé de l'analyse de la distribution de Weibull de la résistance compressive.
